# EUROPÄISCHE PATENTSCHRIFT

(11) **EP 0 708 514 B1**
(45) Veröffentlichungstag und Bekanntmachung des Hinweises auf die Patenterteilung: **16.09.1998**
(21) Anmeldenummer: 95250253.2
(22) Anmeldetag: 18.10.1995
(51) Int. Cl.: H02B 13/035

(54) **Metallgekapselte Hochspannungsschaltanlage mit einer dreipolig gekapselten Sammelschiene**
Metal-clod high voltage switchgear equipment having an enclosed three-phase bus-bar
Installation blindée de distribution à haute tension ayant une barre omnibus triphasée blindée

(30) Priorität: 19.10.1994 DE 4438787
(43) Veröffentlichungstag der Anmeldung: 24.04.1996
(73) Patentinhaber: SIEMENS AKTIENGESELLSCHAFT, 80333 München (DE)
(72) Erfinder: Kelch, Thomas, D-13465 Berlin (DE); Meinherz, Manfred, D-13467 Berlin (DE)

(56) Entgegenhaltungen:
- DE-A- 3 417 299
- US-A- 5 177 664

## Beschreibung

Die Erfindung bezieht sich auf eine metallgekapselte Hochspannungsschaltanlage mit einer dreipolig gekapselten Sammelschiene und mit mehreren in einem Gasraum der Sammelschiene angeordneten, jeweils einpoligen Trennschaltern mit je einem antreibbaren Kontaktstück und einem feststehenden Kontaktstuck wobei die Sammelschienenleiter im Querschnitt an den Eckpunkten eines Dreiecks angeordnet sind, und wobei auf der Mittelachse eines den Gasraum der Sammelschiene im Bereich der Trennschalter umgebenden zylindrischen Kapselungsgehäuses ein erstes Kontaktstück jedes Trennschalters angeordnet ist.

Derartige Hochspannungsschaltanlagen sind beispielsweise aus der JP 53-29539 sowie aus der EP 0 165 184 B1 und der EP 0 127 006 A2 bekannt.

Bei diesen bekannten Hochspannungsschaltanlagen sind jeweils Trennschalter im Gasraum einer dreipolig gekapselten Sammelschiene angeordnet. Bei den aus den Anordnungen der EP 0 127 006 A2 und der JP 53-29539 bekannten Konstruktionen ist jeweils ein Gehäusestutzen notwendig, um die Kontaktanordnung der Trennschalter aufzunehmen. Bei der aus der EP 0 165 184 bekannten Konstruktion ist die Anordnung der Kontaktstücke der Trennschalter nicht eindeutig erkennbar, jedoch ist erkennbar, daß die drei Sammelschienenleiter im Querschnitt des sie umgebenden Kapselungsgehäuses dielektrisch bei weitem nicht optimal angeordnet sind.

Aus der US 5,177 664 ist eine Schaltanlage ähnlich der eingangs genannten Art bekannt, bei der jedoch nicht der optimale Abstand zwischen den Kontaktstücken der Trennschalter und den Sammelschienenleitern erreicht ist. Es ist dort außerdem die gemeinsame Betätigung aller Pole der Trennschalter vorgesehen.

Der vorliegenden Erfindung liegt die Aufgabe zugrunde, eine metallgekapselte Hochspannungsschaltanlage der eingangs genannten Art so zu gestalten, daß einerseits eine dielektrisch günstige Anordnung der Sammelschienenleiter und der Kontakte der Trennschalter möglich ist und daß andererseits die Trennschalter mit möglichst geringem Platzbedarf im Gasraum der Sammelschienen untergebracht werden können.

Die Aufgabe wird erfindungsgemäß dadurch gelost, daß die Trennschalter einzeln antreibbar sind, daß jeweils das erste Kontaktstück feststehend ausgebildet ist und daß die Sammelschienenleiter derart angeordnet sind, daß jeweils das erste Kontaktstück in der Mitte der längsten Seite des Dreickes oder, sofern das Dreieck gleichseitig ist, in der Mitte der dem antreibbaren Kontaktstück zugewandten Seite des Dreiecks liegt.

Durch diese Ausgestaltung ist eine dielektrisch günstige Konstellation gewährleistet, wobei der Trennschalter in unmittelbarer Nähe der Sammelschienenleiter platzsparend angeordnet werden kann, ohne daß die Gefahr von Überschlägen zu groß wird. Es ist daher kein Gehäusestutzen an dem die Sammelschienenleiter aufnehmenden Gehäuse zur Unterbringung des Trennschalters notwendig.

Durch die beschriebene Konstruktion ergibt sich zwingend, daß die zwei Sammelschienenleiter, zwischen denen das erste Kontaktstück angeordnet ist, einander im Querschnitt im Inneren des Kapselungsgehäuses diametral gegenüberliegen, d. h. daß sie mit besonders großem Abstand zueinander und zu dem ersten Kontaktstück angeordnet werden können.

Eine weitere vorteilhafte Ausgestaltung der Erfindung sieht vor, daß sowohl das antreibbare als auch das feststehende Kontaktstück jedes der Trennschalter auf der Mittelachse des Kapselungsgehäuses angeordnet ist.

Eine solche Anordnung bietet sich insbesondere dann an, wenn die Trennschalter zu einer Längstrennung der Sammelschienenleiter verwendet werden sollen. In diesem Fall ist auch kein Anschlußflansch am Umfang des Kapselungsgehäuses notwendig und der Antrieb der Trennschalter kann durch eine den Mantel des Kapselungsgehäuses gasdicht durchsetzende Antriebswelle übertragen werden. Hierdurch ist eine Längstrennvorrichtung geschaffen, die nicht mehr Platz benötigt, als ein herkömmliches Sammelschienengehäuse.

Die Erfindung kann außerdem vorteilhaft dadurch gestaltet werden, daß wenigstens eines der Kontaktstücke jedes Trennschalters mittels eines Säulenstützers innerhalb des Kapselungsgehäuses gestützt ist.

Außerdem kann vorteilhaft vorgesehen sein, daß jeweils das in der Mitte der längsten Seite des Dreiecks angeordnete Kontaktstück eines Trennschalters über ein gerades Leiterstück insbesondere mittels einer Schraubverbindung mit einem der Sammelschienenleiter verbunden ist.

Somit werden gekrümmte Leiterstücke zum Anschluß der Sammelschienenleiter an die Trennschalter vermieden, wie sie beispielsweise aus der EP 0 165 184 B1, der EP 0 127 006 A2 und der JP 53-29539 bekannt sind. Der Herstellungsaufwand für diese Leiterstücke wird somit vermindert und bei entsprechender Anordnung der Sammelschienenleiter können für die Verbindung der verschiedenen Trennschalter mit den einzelnen Sammelschienenleitern der verschiedenen Phasen jeweils gleichgeformte Leiterstücke verwendet werden. Die entsprechenden Kontaktstücke der Trennschalter können alle baugleich mit mehreren Anschlußmöglichkeiten für Leiterstücke ausgeführt sein, wobei jeweils nur eine einzige Anschlußmöglichkeit genutzt wird.

Im folgenden wird die Erfindung anhand eines Ausführungsbeispiels anhand einer Zeichnung gezeigt und anschließend beschrieben.

Dabei zeigt
Figur 1 schematisch in einem Längsschnitt ein Kapselungsgehäuse mit drei Sammelschienenleitern und drei Trennschaltern,
Figur 2 schematisch im Querschnitt die Anordnung aus der Figur 1,
Figur 3 schematisch im Längsschnitt ein Kapselungsgehäuse mit drei Trennschaltern zur Längstrennung von Sammelschienenleitern,
Figur 4 schematisch eine Schaltanlage im Querschnitt.

In einem im Querschnitt runden Kapselungsgehäuse 1 verlaufen im wesentlichen parallel zueinander drei Sammelschienenleiter 2, 3, 4. Das Kapselungsgehäuse 1 weist drei in axialer Richtung hintereinander liegende Anschlußflansche 5, 6, 7 auf, an die Durchführungsisolatoren 8, 9, 10 gasdicht angeflanscht sind. Jeder der Durchführungsisolatoren 8, 9, 10 ist von der Zuleitung 11, 12, 13 eines der Trennschalter 14, 15, 16 durchsetzt.

Der Antrieb des jeweiligen Trennschalters 14, 15, 16 kann entweder ebenfalls durch eine Durchführung durch einen der Isolatoren 8, 9, 10 erfolgen, oder mittels einer Drehwelle, die den zylindrischen Mantel des Kapselungsgehäuses 1 durchsetzt.

Die drei Sammelschienenleiter 2, 3, 4 sind im Querschnitt an den Ecken eines gleichschenkligen Dreiecks angeordnet, wobei die Entfernung zwischen den Sammelschienenleitern 2 und 3 und die Entfernung zwischen den Sammelscheinenleitern 3 und 4 gleich ist. Es kann auch vorteilhaft vorgesehen sein, daß die Entfernung zwischen den Sammelschienenleitern 2 und 4 ebenso groß ist, wie die Entfernungen zwischen den Sammelschienenleitern 3 und 4 bzw. 2 und 3.

Die jeweiligen Trennschalter 14, 15, 16 weisen feststehende Gegenkontaktstücke 17, 18, 19 auf, die jeweils in leitender Verbindung mit einem der Sammelschienenleiter 2, 3, 4 stehen.

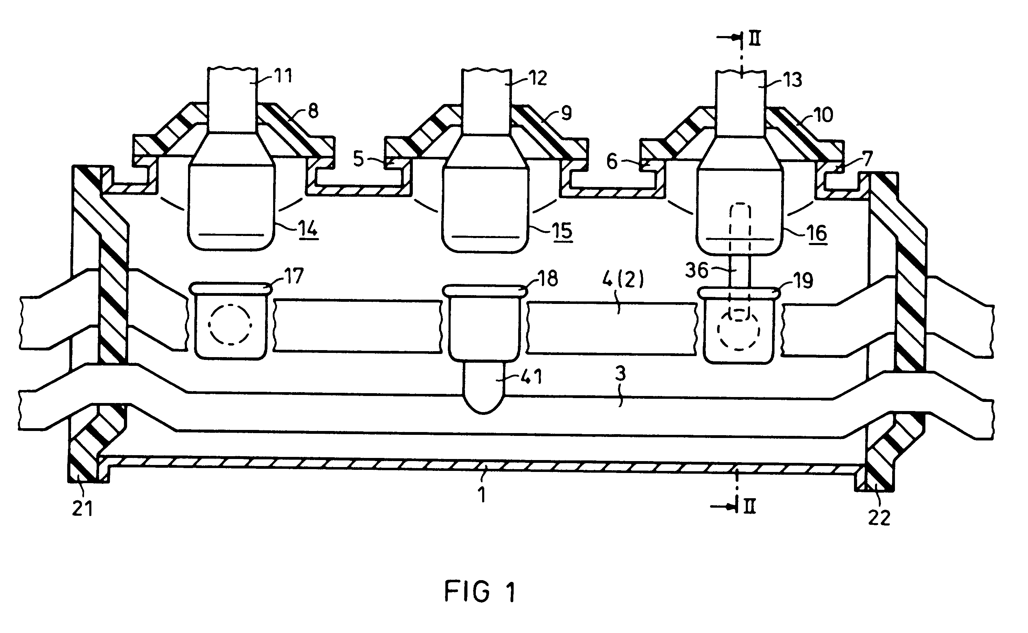

Die wesentlichen Teile der Trennschalter 14, 15, 16 sind innerhalb des Kapselungsgehäuses 1 angeordnet. Die feststehenden Gegenkontaktstücke 17, 18, 19 der Trennschalter 14, 15, 16 sind im Querschnitt auf der Mittelachse des Kapselungsgehäuses 1 angeordnet, so daß für die übrigen Teile der Trennschalter 14, 15, 16, insbesondere die antreibbaren Kontaktstücke 36, von denen schematisch in der Figur 1 eines angedeutet ist, etwa der halbe Querschnitt des Kapselungsgehäuses 1 zur Verfügung steht.

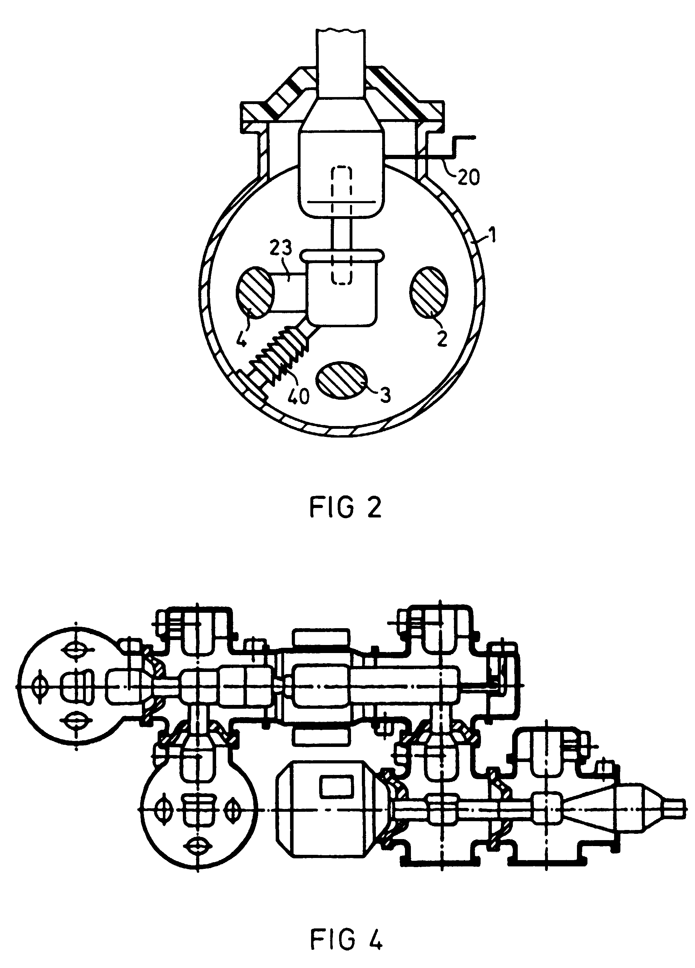

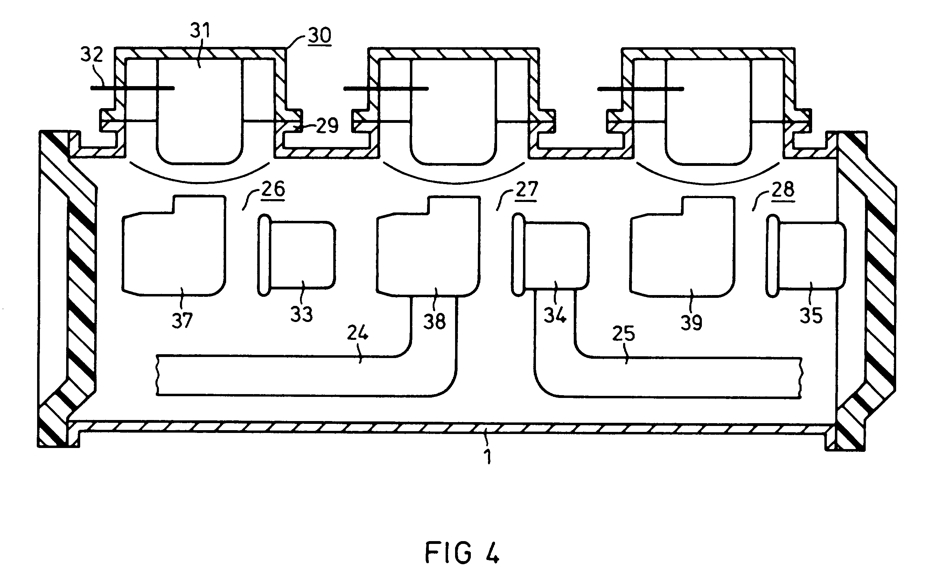

In der Figur 2 ist symbolisch eine Antriebswelle 20 eingezeichnet, die gasdicht durch das Kapselungsgehäuse 1 durchgeführt ist und dem Antrieb eines der Trennschalter 14, 15, 16 dient. Die übrigen Trennschalter weisen ebensolche Antriebswellen auf. Die Anschlußleiter 11, 12, 13 der Trennschalter 14, 15, 16 verbinden die Trennschalter mit den übrigen Teilen der Schaltanlage, beispielsweise einem Leistungsschalter, wie in der Figur 4 dargestellt.

Dadurch, daß die Trennschalter 14, 15, 16 innerhalb des Gasraums der Sammelschienenleiter 2, 3, 4 angeordnet sind, wird ein eigenes Gehäuse für die Trennschalter 14, 15, 16 überflüssig und es kann an das Kapselungsgehäuse 1, das die Sammelschienenleiter 2, 3, 4 beherbergt, direkt ein Kapselungsgehäuse mit weiteren wichtigen Elementen einer gekapselten Hochspannungsschaltanlage platzsparend angeflanscht werden, beispielsweise ein Gehäuse für einen Leistungsschalter.

Der Gasraum, der die Sammelschienenleiter 2, 3, 4 und die Trennschalter 14, 15, 16 beherbergt, ist durch zwei Schottisolatoren 21, 22, abgeschlossen, die verhindern, daß Schaltprodukte der Trennschalter die übrigen Teile der Sammelschiene storen. Die Sammelschienenleiter 2, 3, 4 sind durch die Schottisolatoren 21, 22 durchgeführt und verlaufen außerhalb des Kapselungsgehäuses 1 in weiteren Kapselungsgehäusen, die sich hieran anschließen. Die Sammelschienenleiter 2, 3, 4 sind dort im Querschnitt in an sich bekannter Weise an den Ecken eines gleichseitigen Dreiecks angeordnet bei Einhaltung des größtmöglichen Abstandes untereinander und zum Kapselungsgehäuse.

Die feststehenden Gegenkontaktstücke 17, 18, 19 der Trennschalter 14, 15, 16 können beispielsweise alle baugleich ausgeführt sein und jeweils drei Anschlußvorrichtungen, beispielsweise Gewindebohrungen für Leiterstücke 23 aufweisen, die bedarfsweise das jeweilige feststehende Kontaktstück 17, 18, 19 mit dem jeweils vorgesehenen Sammelschienenleiter 2, 3, 4 verbinden.

Die Figur 3 zeigt im Unterschied zu den Figuren 1 und 2 eine Anordnung mit einem Kapselungsgehäuse 1 und drei Längstrenneinrichtungen für die Sammelschienenleiter 24, 25. Die Gehäuseform des Kapselungsgehäuses 1 ist indentisch mit der in den Figuren 1 und 2 dargestellten. Lediglich sind die Trennschalter 26, 27, 28 koaxial auf der Achse des Kapselungsgehäuses 1 angeordnet. Der Antrieb erfolgt auch hier mittels Drehwellen, die gasdicht durch die zylindrische Wand des Kapselungsgehäuses 1 durchgeführt sind.

Die Flansche 29 werden für diese Funktion nicht benötigt. Allerdings können, wie in der Figur 3 dargestellt, an die Flansche 29 Erdungsschaltereinheiten 30 mit Erdungsschaltern 31 vorgesehen sein. Die Erdungsschalter werden mittels gasdicht durch die Gehäusewand durchgeführter Antriebswellen 32 angetrieben.

Die feststehenden Kontaktstücke 33, 34, 35 der Trennschalter können baugleich mit den in den Figuren 1 und 2 dargestellten sein, eingeschlossen der Anschlußmöglichkeiten für die Sammelschienenleiter 24, 25.

Durch die beschriebene Konstruktion wird eine sehr platzsparende Anordnung für einen Dreifach-Sammelschienenlängstrenner geschaffen.

## Patentansprüche

1. Metallgekapselte Hochspannungsschaltanlage mit einer dreipolig gekapselten Sammelschiene und mit mehreren in einem Gasraum der Sammelschiene angeordneten, jeweils einpoligen Trennschaltern (14, 15, 16, 26, 27, 28) mit je einem antreibbaren Kontaktstück und einem feststehenden Kontaktstück (17, 18, 19, 33, 34, 35), wobei die Sammelschienenleiter (2, 3, 4, 24, 25) im Querschnitt an den Eckpunkten eines Dreiecks angeordnet sind, und wobei auf der Mittelachse eines den Gasraum der Sammelschiene im Bereich der Trennschalter (14, 15, 16, 26, 27, 28) umgebenden zylindrischen Kapselungsgehäuses (1) ein erstes Kontaktstück (17, 18, 19, 33, 34, 35) jedes Trennschalters (14, 15, 16, 26, 27, 28) angeordnet ist,
**dadurch gekennzeichnet,**daß die Trennschalter einzeln antreibbar sind und, daß jeweils das erste Kontaktstück feststehend ausgebildet ist und daß die Sammelschienenleiter derart angeordnet sind, daß jeweils das erste Kontaktstück in der Mitte der längsten Seite des Dreieckes oder, sofern das Dreieck gleichseitig ist, in der Mitte der dem antreibbaren Kontaktstück zugewandten Seite des Dreiecks liegt.

2. Metallgekapselte Hochspannungsschaltanlage nach Anspruch 1,
**dadurch gekennzeichnet,** daß sowohl das antreibbare als auch das feststehende Kontaktstück (33, 34, 35, 37, 38, 39) jedes der Trennschalter (26, 27, 28) auf der Mittelachse des Kapselungsgehäuses (1) angeordnet ist.

3. Metallgekapselte Hochspannungsschaltanlage nach Anspruch 1 oder einem der folgenden,
**dadurch gekennzeichnet,** daß
wenigstens eines der Kontaktstücke jedes Trennschalters mittels eines Säulenstützers (40) innerhalb des Kapselungsgehäuses gestützt ist.

4. Metallgekapselte Hochspannungsschaltanlage nach Anspruch 1 oder einem der folgenden,
**dadurch gekennzeichnet,** daß jeweils das in der Mitte der längsten Seite des Dreiecks angeordnete Kontaktstück (17, 18, 19) eines Trennschalters (14, 15, 16) über ein gerades Leiterstück (23, 41), insbesondere mittels einer Schraubverbindung mit einem der Sammelschienenleiter (2, 3, 4) verbunden ist.

## Claims

1. High voltage metal-encapsulated switchgear with a three-phase encapsulated busbar and with a plurality of respective single-phase isolating switches (14, 15, 16, 26 27, 28) arranged in a gas compartment of the busbar and having a respective drivable contact piece and a stationary contact piece (17, 18, 19, 33, 34, 35), wherein the busbar conductors (2, 3, 4, 24, 25) are arranged in cross section at the corners of a triangle and wherein a first contact piece (17, 18, 19, 33, 34, 35) of each isolating switch (14, 15, 16, 26, 27, 28) is arranged on the centre line of a cylindrical encapsulating housing (1) surrounding the gas compartment of the busbar in the region of the isolating switches (14, 15, 16, 26, 27, 28), characterized in that the isolating switches are drivable individually and in that the first respective contact piece is stationary in design and in that the busbar conductors are so arranged that the first respective contact piece is located in the centre of the longest side of the triangle or, if the triangle is equilateral, in the centre of the side of the triangle facing the drivable contact piece.

2. High voltage metal-encapsulated switchgear according to Claim 1, characterized in that the drivable as well as the stationary contact piece (33, 34, 35, 37, 38, 39) of each of the isolating switches (26, 27, 28) is arranged on the centre line of the encapsulating housing (1).

3. High voltage metal-encapsulated switchgear according to Claim 1 or one of the following claims, characterized in that at least one of the contact pieces of each isolating switch is protected by means of a post insulator (40) inside the encapsulating housing.

4. High voltage metal-encapsulated switchgear according to Claim 1 or one of the following claims, characterized in that the respective contact piece (17, 18, 19), arranged in the centre of the longest side of the triangle, of an isolating switch (14, 15, 16) is connected to one of the busbar conductors (2, 3, 4) via a straight conductor piece (23, 41), in particular by means of a screw connection.

## Revendications

1. Installation de coupure haute tension à blindage métallique, comportant un rail collecteur blindé de manière tripolaire et comportant plusieurs sectionneurs (14, 15, 16, 26, 27, 28) monopolaires montés dans une chambre de gaz du rail collecteur et comportant chacun une pièce de contact pouvant être entraînée et une pièce (17, 18, 19, 33, 34, 35) de contact fixe, les conducteurs (2, 3, 4, 24, 25) du rail collecteur étant disposés, en section transversale, aux sommets d'un triangle, et une première pièce (17, 18, 19, 33, 34, 35) de contact de chaque sectionneur (14, 15, 16, 26, 27, 28) étant montée sur l'axe médian d'un boîtier (1) de blindage cylindrique entourant la chambre de gaz du rail collecteur dans la zone des sectionneurs (14, 15, 16, 26, 27, 28), caractérisée en ce que les sectionneurs peuvent être entraînés individuellement, et en ce que chaque première pièce de contact est réalisée comme pièce fixe, et en ce que les conducteurs du rail collecteur sont disposés de telle manière que chaque première pièce de contact se trouve au milieu du côté le plus grand du triangle ou, dans la mesure où le triangle est équilatéral, au milieu du côté du triangle tourné vers la pièce de contact pouvant être entraînée.

2. Installation de coupure haute tension à blindage métallique suivant la revendication 1, caractérisée en ce que tant la pièce de contact pouvant être entraînée que la pièce de contact (33, 34, 35, 37, 38, 39) fixe de chacun des sectionneurs (26, 27, 28) est montée sur l'axe médian du boîtier (1) de blindage.

3. Installation de coupure haute tension à blindage métallique suivant la revendication 1 ou l'une des suivantes, caractérisée en ce qu'au moins l'une des pièces de contact de chaque sectionneur est soutenue à l'intérieur du boîtier de blindage au moyen d'un support en colonne.

4. Installation de coupure haute tension à blindage métallique suivant la revendication 1 ou l'une des suivantes, caractérisée en ce que la pièce (17, 18, 19) de contact d'un sectionneur (14, 15, 16) montée au milieu du côté le plus grand du triangle est reliée à l'un des conducteurs (2, 3, 4) du rail collecteur par l'intermédiaire d'une pièce (23, 41) conductrice rectiligne, notamment au moyen d'un vissage.
